# EUROPÄISCHE PATENTSCHRIFT

(11) **EP 3 795 437 B1**
(45) Veröffentlichungstag und Bekanntmachung des Hinweises auf die Patenterteilung: **15.02.2023**
(21) Anmeldenummer: 20195536.6
(22) Anmeldetag: 10.09.2020
(51) Int. Cl.: B60T 11/16, B60T 11/22, B60T 11/228, B60T 11/236

(54) **GEBERARMATUR FÜR EINE HYDRAULISCHE BREMSE ODER KUPPLUNG LENKERGEFÜHRTER FAHRZEUGE UND HYDRAULISCHE BREMSE EINES LENKERGEFÜHRTEN FAHRZEUGES**
TRANSMITTER UNIT FOR A HYDRAULIC BRAKE OR CLUTCH OF STEERING-GUIDED VEHICLES AND HYDRAULIC BRAKE OF A STEERING-GUIDED VEHICLE
MAÎTRE-CYLINDRE POUR UN FREIN HYDRAULIQUE OU UN EMBRAYAGE DU VÉHICULES À GUIDON ET FREIN HYDRAULIQUE D'UN VÉHICULE À GUIDON

(30) Priorität: 18.09.2019 DE 102019214197
(43) Veröffentlichungstag der Anmeldung: 24.03.2021
(73) Patentinhaber: Gustav Magenwirth GmbH & Co. KG, 72574 Bad Urach (DE)
(72) Erfinder: Hujer, Joachim, 72582 Grabenstetten (DE)
(74) Vertreter: Friese Goeden Patentanwälte PartGmbB

(56) Entgegenhaltungen:
- EP-A1- 1 352 800
- EP-A2- 3 118 074
- CN-Y- 201 385 746
- DE-A1- 2 749 268
- DE-A1-102007 019 494
- DE-A1-102007 023 420

## Beschreibung

Die Erfindung betrifft eine Geberarmatur für eine hydraulische Bremse oder Kupplung eines lenkergeführten Fahrzeugs gemäß dem Oberbegriff von Anspruch 1 und eine hydraulische Bremse oder Kupplung eines lenkergeführten Fahrzeugs.

Aus der WO 2015 028 429 A2 ist eine Geberarmatur gemäß dem Oberbegriff von Anspruch 1 bekannt.

Die bekannten Geberarmaturen für eine hydraulische Bremse oder Kupplung lenkergeführter Fahrzeuge weisen ein Gehäuse auf, in dem ein Ausgleichsraum für Hydraulikfluid angeordnet ist. In dem Gehäuse ist eine Nut vorgesehen, die den Ausgleichsraum einschließt. Der Ausgleichsraum ist mit einem Balg fluiddicht abgeschlossen. Der Balg weist ein Dichtungselement auf, das in der Nut angeordnet ist. Das Dichtungselement umfasst einen umlaufenden Wulst, das zur fluiddichten Abdichtung von dem Deckel gegen den Nutgrund der Nut gepresst wird, wenn der Deckel an dem Gehäuse befestigt ist, um den Ausgleichsraum zu verschließen. Dabei dichtet das Dichtungselement gegen den Nutgrund ab.

Die bekannten Geberarmaturen haben den Nachteil, dass sehr geringe Fertigungstoleranzen eingehalten werden müssen, damit das Dichtungselement über den gesamten Verlauf des Dichtungselements hinreichend gegen den Nutgrund gepresst wird, um die notwendige fluiddichte Abdichtung zu gewährleisten. Auch muss der Deckel derart und ausgebildet und an dem Gehäuse angeordnet bzw. befestigt sein, dass sichergestellt ist, dass er entlang des gesamten Verlaufs des Dichtungselements einen für eine fluiddichte Abdichtung hinreichenden Druck auf das Dichtungselement ausbilden kann.

Ein weiteres Beispiel einer derartigen Armatur ist aus der EP 3 118 074 A2 bekannt.

Der Erfindung liegt daher die Aufgabe zugrunde, eine Geberarmatur mit einem Ausgleichsbehälter anzugeben, bei der eine sichere Abdichtung trotz hoher Toleranzen gewährleistet ist.

Die Aufgabe wird erfindungsgemäß durch eine Geberarmatur gemäß den Merkmalen von Anspruch 1 gelöst. Vorteilhafte Weiterbildungen der Erfindung finden sich in den Unteransprüchen.

Gemäß der Erfindung wird eine Geberarmatur für eine hydraulische Bremse oder Kupplung lenkergeführter Fahrzeuge angegeben, die ein Gehäuse aufweist, in dem ein Ausgleichsraum für Hydraulikfluid angeordnet ist, wobei in dem Gehäuse eine Nut vorgesehen ist, die den Ausgleichsraum einschließt, wobei der Ausgleichsraum mit einem Balg fluiddicht abgeschlossen ist, wobei der Balg ein Dichtungselement aufweist, das in der Nut angeordnet ist, wobei die Breite des Dichtungselements des Balgs größer als die Nutbreite der Nut ist.

Diese Ausbildung hat den Vorteil, dass das Dichtungselement gegen die Seitenwände der Nut abdichtet. Das Dichtungselement muss daher nicht mehr entlang seines gesamten Verlaufs gegen den Nutgrund gepresst werden.

Erfindungsgemäß kann zwischen Nutgrund und Dichtungselement auch eine Abdichtung erfolgen, d.h. zusätzlich zu der Abdichtung zwischen zumindest einer der Seitenwände bzw. den beiden Seitenwänden der Nut und dem Dichtungselement.

Erfindungsgemäß kann das Dichtungselement derart in der Nut angeordnet und derart ausgebildet sein, dass das Dichtungselement des Balgs gegen beide Seitenwände der Nut gepresst wird, um die fluiddichte Abdichtung auszubilden.

Erfindungsgemäß kann die Breite des Dichtungselements des Balgs mehr als 2% größer als die Nutbreite der Nut sein. Erfindungsgemäß kann die Breite des Dichtungselements des Balgs mehr als 4% größer als die Nutbreite der Nut sein. Erfindungsgemäß kann die Breite des Dichtungselements des Balgs mehr als 6% größer als die Nutbreite der Nut sein. Erfindungsgemäß kann die Breite des Dichtungselements des Balgs mehr als 8% größer als die Nutbreite der Nut sein. Erfindungsgemäß kann die Breite des Dichtungselements des Balgs weniger als 20% größer als die Nutbreite der Nut sein. Erfindungsgemäß kann die Breite des Dichtungselements des Balgs weniger als 18% größer als die Nutbreite der Nut sein. Erfindungsgemäß kann die Breite des Dichtungselements des Balgs weniger als 16% größer als die Nutbreite der Nut sein. Erfindungsgemäß kann die Breite des Dichtungselements des Balgs weniger als 14% größer als die Nutbreite der Nut sein. Erfindungsgemäß kann die Breite des Dichtungselements des Balgs weniger als 12% größer als die Nutbreite der Nut sein. Erfindungsgemäß kann die Breite des Dichtungselements des Balgs ungefähr 10% größer als die Nutbreite der Nut sein.

Als Breite des Dichtungselements kann dabei die auf die Ebene des Dichtungselements bzw. die Ebene der Nut bezogene Breite zu verstehen sein.

Erfindungsgemäß kann die Geberarmatur einen Deckel aufweisen, der den Balg abdeckt, wobei der Deckel zumindest einen Steg oder mehrere Stege aufweist, der bzw. die das Dichtungselement des Balgs in die Nut drückt bzw. drücken.

Erfindungsgemäß kann der Abstand zwischen dem Steg bzw. den Stegen und dem Nutgrund der Nut größer oder gleich der Höhe des Dichtelements des Balgs sein.

Erfindungsgemäß kann das Dichtelement in der Nut angeordnet sein, ohne dass Druck von dem Dichtelement in Richtung Nutgrund ausgeübt wird, bzw. ohne dass das Dichtelement gegen den Nutgrund gepresst wird.

Erfindungsgemäß kann der Abstand zwischen dem Steg bzw. den Stegen und dem Nutgrund der Nut mehr als 5% größer als die Höhe des Dichtelements des Balgs sein.

Erfindungsgemäß kann der Abstand zwischen dem Steg bzw. den Stegen und dem Nutgrund der Nut mehr als 10% größer als die Höhe des Dichtelements des Balgs sein.

Erfindungsgemäß kann der Abstand zwischen dem Steg bzw. den Stegen und dem Nutgrund der Nut mehr als 20% größer als die Höhe des Dichtelements des Balgs sein.

Erfindungsgemäß kann der Abstand zwischen dem Steg bzw. den Stegen und dem Nutgrund der Nut mehr als 30% größer als die Höhe des Dichtelements des Balgs sein.

Erfindungsgemäß kann der Abstand zwischen dem Steg bzw. den Stegen und dem Nutgrund der Nut mehr als 40% größer als die Höhe des Dichtelements des Balgs sein.

Erfindungsgemäß kann der Abstand zwischen dem Steg bzw. den Stegen und dem Nutgrund der Nut mehr als 50% größer als die Höhe des Dichtelements des Balgs sein.

Erfindungsgemäß kann der Abstand auch größer sein. Es sollte aber vorzugsweise gewährleistet sein, dass das Dichtelement entlang seines Umfangs überall hinreichend weit bzw. tief in der Nut angeordnet ist, um entlang seines gesamten Verlaufs um den Ausgleichsbehälter eine fluiddichte Abdichtung zwischen dem Dichtelement und zumindest einer Seitenwand der Nut gewährleistet ist.

Erfindungsgemäß kann der Deckel mit zumindest einer Schraubverbindung oder mehreren Schraubverbindungen an dem Gehäuse befestigt sein.

Erfindungsgemäß kann die Schraubverbindung bzw. können die Schraubverbindungen eine Schraube umfassen, die beispielweise ein Außengewinde aufweisen kann, wobei die Schraube in einer Gewindeaussparung angeordnet sein kann, die in dem Gehäuse vorgesehen ist. Die Gewindeaussparung kann dabei ein entsprechendes Innengewinde aufweisen.

Erfindungsgemäß kann der Deckel mit zumindest einer Rastverbindung oder mehreren Rastverbindungen an dem Gehäuse befestigt sein.

Erfindungsgemäß können die zumindest eine oder die mehreren Rastverbindungen alternativ oder zusätzlich zu der mindestens einen oder den mehreren Schraubverbindungen vorgesehen sein.

Erfindungsgemäß kann die Rastverbindung bzw. können die Rastverbindungen ein Rastelement umfassen, welches integraler Bestandteil des Deckels sein kann. Das Rastelement kann einen Kragarm umfassen, wobei an dessen Ende ein Kopf mit einer Gleitfläche angeordnet sein kann. Zum Ausbilden der Rastverbindung kann der Kopf mit einem in dem Gehäuse ausgebildeten Hinterschnitt zusammenwirken, wobei der Kopf an dem Hinterschnitt einrasten kann, sobald der Deckel hinreichend weit gegen das Gehäuse gedrückt wurde.

Erfindungsgemäß können Rastverbindungen besonders vorteilhaft vorgesehen werden, weil in Einrastrichtung hohe Toleranzen betreffend die fluiddichte Abdichtung möglich sind, weil die Abdichtung im Wesentlichen senkrecht zur Montagerichtung des Deckels erfolgt. Daher kann die Konstruktion auf ein optimales Einrasten ausgelegt werden.

Im Gegensatz zum Stand der Technik ist es bei den Ausführungen der Erfindung mit Rastverbindungen nicht erforderlich, die Toleranzen für ein fluiddichtes Abdichten zwischen Nutgrund und Dichtelement sowie für ein Einrasten geleichzeitig einzuhalten. Hier können die die Toleranzen für das Einrasten unabhängig von den Toleranzen für das Abdichten konstruktiv eingestellt werden, weil diese im Wesentlichen Senkrecht zueinander auszulegen sind. Beispielsweise können die Breite der Nut und die Breite des Dichtungselements unabhängig von der Länge des Rastelements und der Lage des Hinterschnitts gewählt werden.

Erfindungsgemäß kann der Deckel mit zumindest einer Schweißverbindung oder mehreren Schweißverbindungen an dem Gehäuse befestigt sein.

Erfindungsgemäß können die zumindest eine oder die mehreren Schweißverbindungen alternativ oder zusätzlich zu der mindestens einen oder den mehreren Schraubverbindungen und/oder Rastverbindungen vorgesehen sein.

Im Gegensatz zum Stand der Technik ist es bei den Ausführungen der Erfindung mit Schweißverbindungen nicht erforderlich, dass beim Ausbilden der Schweißverbindung(en) der Deckel einen hinreichenden Druck auf das Dichtelement ausübt, um eine fluiddichte Abdichtung zwischen Nutgrund und Dichtelement auszubilden. Hinreichend ist es beispielsweise, dass durch das Anordnen des Deckels das Dichtelement hinreichend tief bzw. weit in der Nut angeordnet ist, so dass eine Abdichtung zwischen dem Dichtelement und beispielsweise zumindest einer Seitenwand der Nut ausgebildet ist. Das Ausbilden der Schweißverbindung kann hingegen druckfrei erfolgen, d.h. dass beim Verschweißen kein Druck auf den Deckel ausgeübt werden muss. Damit kann der Fachmann auch andere Verfahren einsetzen, beispielsweise auch Verfahren, bei denen der Deckel beim Verschweißen warm und verformbar wird und erst nach dem Verschweißen wieder aushärtet. Im Stand der Technik wäre das nicht möglich, weil dann beim Verschweißen der Druck des Deckels nachlassen und das Dichtelement in Richtung Deckel rutschen würde, wodurch sich die Gefahr eines Lecks vergrößert. Im Gegensatz zum Stand der Technik können erfindungsgemäß hohe Toleranzen vorhanden sein, so dass das Dichtelement ohne Gefahr einer V Verschlechterung der Abdichtung in Richtung Deckel rutschen könnte, wenn es vorher hinreichend weit bzw. tief in der Nut angeordnet wurde.

Alternativ und/oder zusätzlich können weitere dem Fachmann bekannte Befestigungsmittel vorgesehen werden. Dabei ist der Fachmann nicht so eingeschränkt, wie beim Stand der Technik, weil die einzuhaltenden Toleranzen sehr groß sind. So muss beispielsweise nicht gewährleistet sein, dass der Deckel das Dichtelement überall mit dem hinreichenden Druck gegen den Nutgrund presst. Hinreichend ist, dass der Deckel das Dichtelement hinreichend weit bzw. tief in der Nut anordnet, so dass eine ausreichende fluiddichte Abdichtung zwischen Dichtelement und zumindest einer Seitenwand der Nut ausgebildet wird. Die fluiddichte Abdichtung ist dabei durch den Druck zwischen Seitenwand und Dichtelement gewährleistet, der aufgrund der Ausbildung und der Abmessungen, wie beispielsweise Breite und Umfang von Nut und Dichtelement entsteht, wenn das Dichtelement in die Nut eingebracht wird.

Erfindungsgemäß können zwei zumindest Verbindungen (beispielsweise Schraubverbindungen und/oder Rastverbindungen und/oder Schweißverbindungen und/oder dem Fachmann bekannte alternative Verbindungen) vorgesehen sein. Dabei können zwei gleiche oder unterschiedliche Verbindungen ausgebildet sein. Die Verbindungen können an gegenüberliegenden Enden des Deckels vorgesehen sein. Alternativ oder zusätzlich können Verbindungen an den Seiten des Deckels vorgesehen sein. Auch können Verbindungen an allen Seiten des Deckels vorgesehen sein. Dabei können eine oder zwei oder mehrere Verbindungen vorgesehen sein. Allerdings hat die Erfindung den Vorteil, dass der Deckel relativ locker an dem Gehäuse angeordnet werden kann, weil der Deckel nicht unbedingt Druck auf das Dichtelement ausüben muss, aber könnte.

Erfindungsgemäß wird auch eine hydraulische Bremse bzw. hydraulische Kupplung bzw. hydraulische Fahrradbremse angegeben, wobei die hydraulische Bremse bzw. hydraulische Kupplung bzw. hydraulische Fahrradbremse eine erfindungsgemäße Geberarmatur aufweist.

Erfindungsgemäß kann die hydraulische Fahrradbremse eine Scheibenbremse bzw. eine Felgenbremse sein.

Die Erfindung wird im Folgenden anhand der in den Figuren gezeigten Ausführungsbeispiele beschrieben. Dabei werden folgende Bezugszeichen verwendet:
- 1: Geberarmatur
- 10: Deckel
- 11: Abdeckung
- 12: Seitenwand
- 13: Steg
- 15: Öffnung
- 20: Gehäuse
- 21: Zylinder
- 22: Steg
- 23: Nut
- 231: Nutgrund
- 232: Seitenwand (der Nut 23)
- 233: Seitenwand (der Nut 23)
- 234: Steg
- 24: Steg
- 30: Balg
- 31: Abdeckung
- 32: Seitenwand
- 33: Dichtlelement
- 331: Dichtfläche
- 332: Dichtfläche
- 40: Schraubverbindung
- 41: Schraube
- 42: Außengewinde
- 43: Aussparung bzw. Bohrung
- 44: Innengewinde
- 50: Rastverbindung
- 51: Rastelement
- 52: Kopf
- 53: Hinterschnitt
- 60: Schweißverbindung
- 61: Steg
- 62: Steg
- mr: Montagerichtung des Deckels
- ap1: Richtung der Anpresskraft auf Dichtfläche 331
- ap2: Richtung der Anpresskraft auf Dichtfläche 332
- bn: Breite der Nut 23
- bd: Breite des Dichtelements 33
- nd: Abstand zwischen Steg 13 und Nutgrund 231
- hd: Höhe des Dichtelements 33

Kurzbeschreibung der Figuren:
- Fig. 1: zeigt eine Teilschnittansicht durch eine Geberarmatur gemäß einer Ausführung der Erfindung entlang der Linien I-I von Fig. 5, wobei der Deckel vollständig an dem Gehäuse befestigt ist
- Fig. 2: zeigt eine der Fig. 1 entsprechende Ansicht der Geberarmatur von Fig. 1, wobei der Deckel auf das Gehäuse aufgesetzt und das Dichtelement des Balgs auf der Nut des Gehäuses aufliegt, bevor es durch das Befestigen des Deckels an dem Gehäuse in das das Dichtelement eingebracht wird.
- Fig. 3: zeigt eine schematische Darstellung zur Erläuterung der Breite des Dichtelements im Verhältnis der Breite der Nut.
- Fig. 4: zeigt eine schematische Darstellung zur Erläuterung der Höhe des Dichtelements im Verhältnis dem Abstand des Stegs des Deckels zu dem Nutgrund bzw. der freien Nuthöhe.
- Fig. 5: zeigt eine Teilschnittansicht der Geberarmatur von Fig. 1 entlang der Linien V-V von Fig. 1.
- Fig. 6: zeigt eine Aufsicht der Geberarmatur von Fig. 1.
- Fig. 7: zeigt eine der Fig. 5 entsprechende Teilansicht einer Ausführungsform der Erfindung, wobei ein größerer Teil des Gehäuses dargestellt ist.
- Fig. 8: zeigt eine Detailansicht der Rastverbindung der Ausführungsform von Fig. 7.
- Fig. 9: zeigt eine der Fig. 6 entsprechende Aufsicht der Ausführungsform von Fig. 7.
- Fig. 10: zeigt eine den Figuren 6 und 9 entsprechende Aufsicht einer weiteren Ausführungsform der Erfindung.
- Fig. 11: zeigt eine der Fig. 6 entsprechende Aufsicht des Gehäuses einer weiteren Ausführungsform der Erfindung ohne Deckel.
- Fig. 12: zeigt eine Teilschnittansicht durch das Gehäuse der Ausführungsform der Fig. 11 entlang der Linien XII-XII.
- Fig. 13: zeigt eine perspektivische Ansicht des Gehäuses einer weiteren Ausführungsform der Erfindung.
- Fig. 14: zeigt eine Teilschnittansicht durch die Ausführungsform von Fig. 13 mit Deckel und Balg.

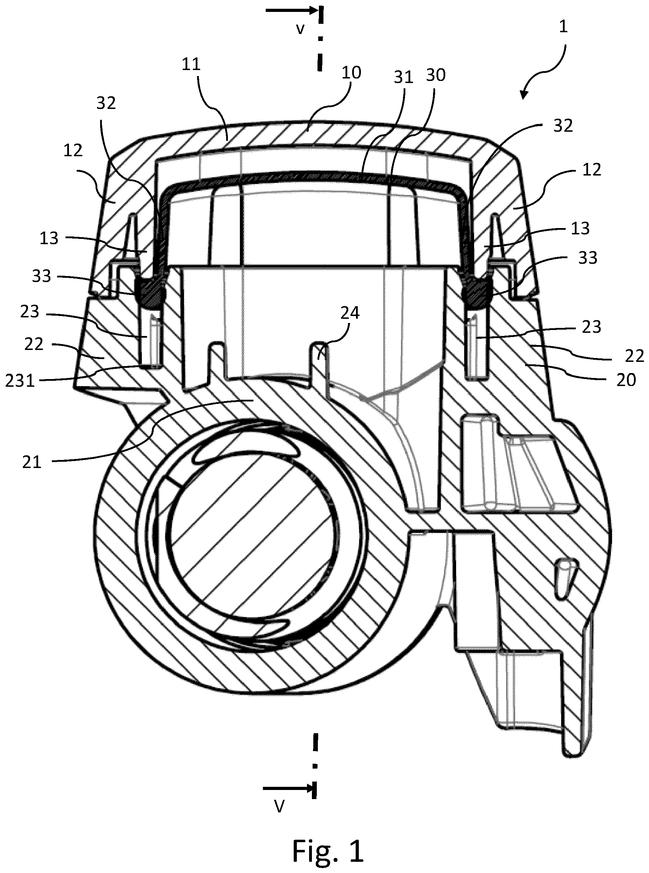

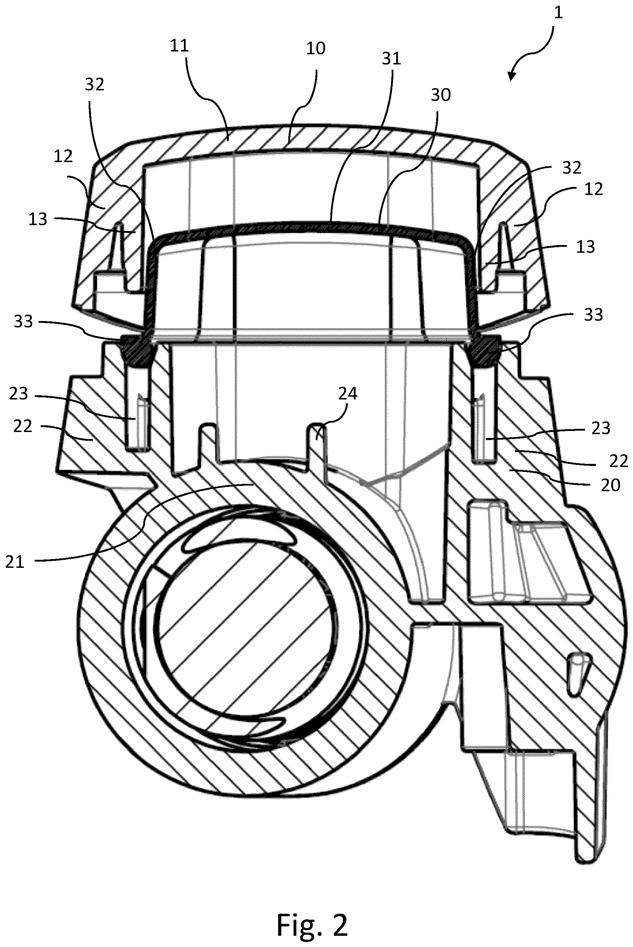

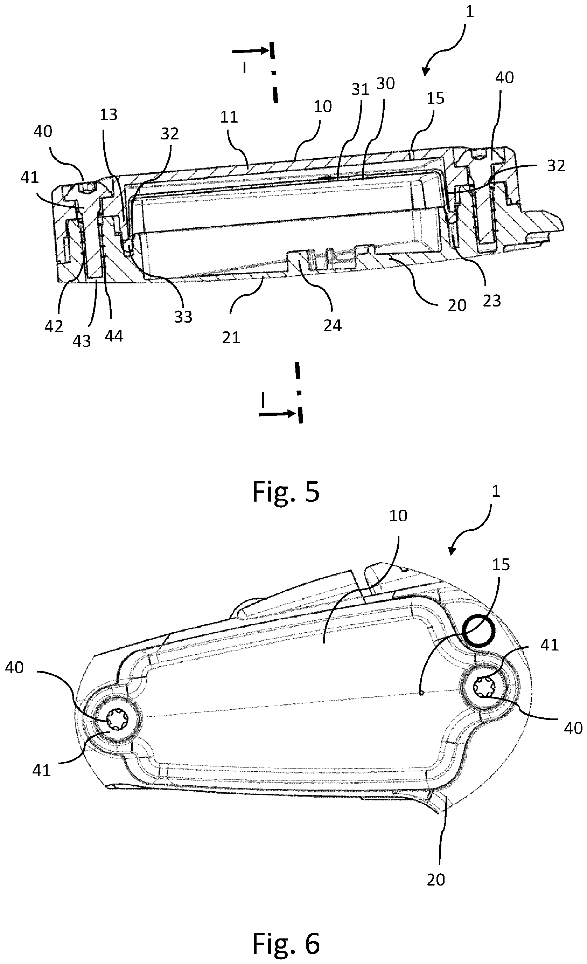

Die Figuren 1 bis 6 zeigen eine erste Ausführung einer Geberarmatur 1 gemäß einer Ausführung der Erfindung.

Die Geberarmatur 1 weist ein Gehäuse 20 auf, in dem ein Zylinder 21 ausgebildet ist, in dem ein Kolben auf dem Fachmann bekannte Weise verschiebbar angeordnet ist, um Druck zur Betätigung der Hydraulikvorrichtung aufzubauen. Die Geberarmatur 1 weist einen Ausgleichsraum auf, der im unbetätigten Zustand mit dem Druckraum in Verbindung steht und bei Betätigung der Geberarmatur von dem Druckraumgetrennt wird.

Der Ausgleichraum ist von einem Deckel 10 abgedeckt. In dem Ausgleichsraum ist ein Balg 30 vorgesehen, der das Hydraulikfluid von einem Ausgleichsvolumen trennt, das in der Regel mit der Umgebung in Verbindung steht, wie beispielsweise über die Öffnung 15 in dem Deckel 10.

Der Balg 30 ist derart angeordnet und ausgebildet, dass er das Hydraulikfluid gegenüber der anderen Seite fluiddicht abdichtet. Der Balg 30 weist eine Abdeckung 31 und eine umlaufende Seitenwand 32 auf, an deren Ende ein Dichtelement 33 angeordnet ist. Das Dichtelement 33 kann ein umlaufender Wulst sein, der eine größere Breite als die Seitenwand 32 aufweist. Der Balg kann als ein Spritzteil mit dem Dichtelement 33 ausgebildet sein. Alternativ oder zusätzlich kann das Dichtelement 33 auch separat gefertigt und an dem Balg 31 angeordnet werden, beispielsweise durch Vulkanisation.

Der Deckel 10 weist eine Abdeckung 11 und eine Seitenwand 12 auf. Des Weiteren weist der Deckel 11 einen Steg 13 auf, der das Dichtelement 33 in einen in dem Gehäuse ausgebildete Nut 23 drückt. Dabei muss nur beim Anordnen des Deckels 10 Druck ausgeübt werden. Sobald das Dichtelement 33 in der Nut 23 angeordnet ist, muss kein weiterer Druck ausgeübt werden.

Der Steg 13 muss nicht umlaufend ausgebildet sein. Es ist hinreichend, wenn der Steg 13 an so vielen Stellen ausgebildet ist, dass das Dichtelement 33 beim Anordnen des Deckels 10 hinreichend weit bzw. tief in die Nut 23 geschoben wird.

An dem Gehäuse 20 ist ein Steg 22 vorsehen, der vorzugsweise umlaufend, d.h. um den Ausgleichsraum umlaufend ausgbildet ist, und mit der Seitenwand der Deckels 10 abschließt.

In dem Gehäuse 20 ist eine Nut 23 vorgesehen, die den Ausgleichsraum umschließt, und in der das Dichtelement 33 des Balgs 30 angeordnet ist.

Die Nut 23 weist einen Nutgrund 231 und gegenüberliegende Seitenwände 231, 232 auf, zwischen denen das Dichtelement 33 angeordnet ist.

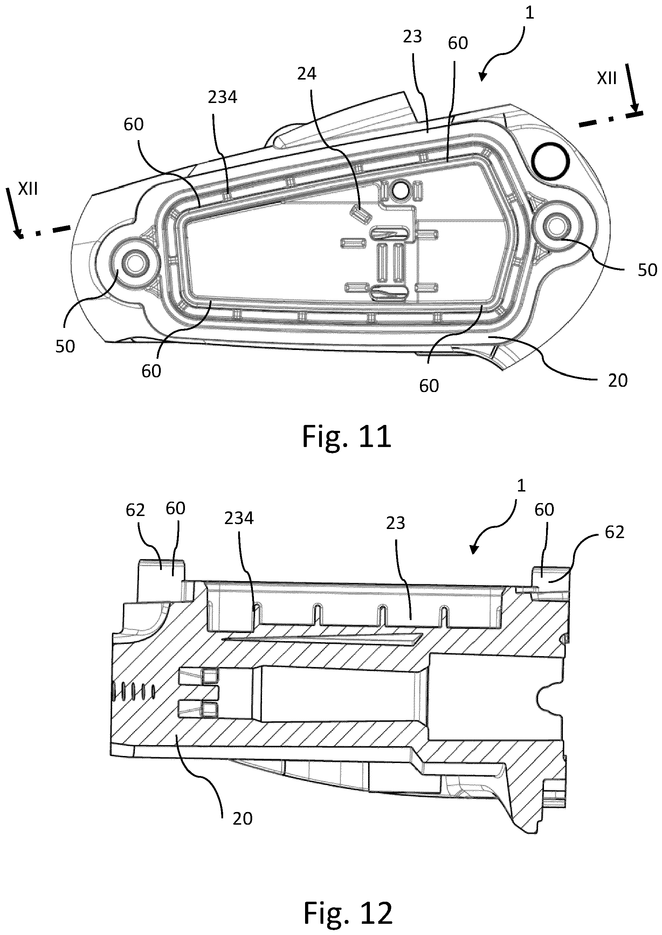

Am Boden der Nut 23 können, wie bei der Ausführung der Figuren 11 und 12 gezeigt, Stege 234 vorgesehen sein. Im Gegensatz zum Stand der Technik kann die Nut tiefer ausgebildet sein, weil keine Abdichtung am Nutgrund 231 erforderlich ist. Das kann hilfreich sein, wenn das Gehäuse 20 als Spritzgussteil ausgebildet werden soll.

In dem Ausgleichsraum können am Boden Stege 24 vorgesehen sein, auf denen der Balg 30 aufliegen kann, um einen Verschluss der Öffnung zum Druckraum zu verhindern.

Bei der Ausführungsform der Figuren 1 bis 6 ist der Deckel 10 mit zwei Schraubverbindungen 40 an dem Gehäuse 20 befestigt.

Die Schraubverbindungen umfassen jeweils eine Schraube 41 mit einem Außengewinde, die in einer Aussparung bzw. einer Bohrung 43 in dem Gehäuse 20 angeordnet sind. Die Aussparung 43 umfasst ein Innengewinde 44, in die Schraube 41 eingeschraubt ist.

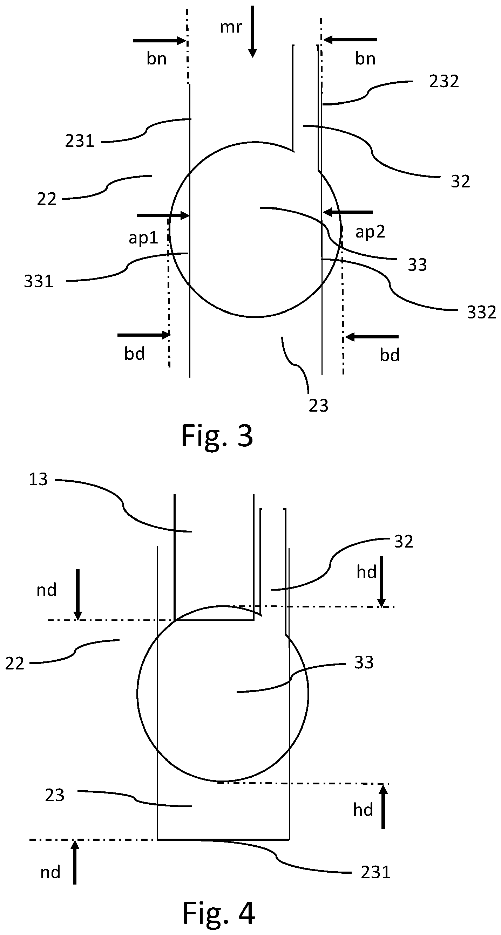

Fig. 3 zeigt schematisch, dass die Breite bd des Dichtelements 33 wesentlich größer als die Breite des Seitenwand 32 und etwas größer als die Breite bn der Nut 23 ist. Da die Breite bd des Dichtelements 33 größer als die Breite bn der Nut 23 ist, wird das Dichtelement 33 unter Druck in der Nut angeordnet, so das eine Abdichtung zwischen der linken Seitenwand 231 der Nut 23 (beispielsweise die Außenwand) und dem Dichtelement 33 sowie zwischen der rechten Seitenwand 232 (beispielsweise die Innenwand) und dem Dichtelement 33 ausgebildet wird. Hinreichend ist es dabei, dass eine gute Abdichtung zwischen dem Dichtelement 33 und einer Seitenwand, vorzugsweise der Innenwand ausgebildet wird.

In Fig. 3 zeigt schematisch die Dichtfläche 331, die an der linken Seitenwand 231 beim Einbringen des Dichtelements 33 in die Nut 23 zwischen dem Dichtelement 33 und der linken Seitenwand 231 durch die Anpresskraft ap1 ausgebildet wird, sowie die Richtung der Anpresskraft ap1. Die Richtung der Anpresskraft ap1 ist senkrecht zu bzw. im Wesentlichen senkrecht zu der ebenfalls schematisch mit einem Pfeil dargestellten Montagerichtung mr des Deckels 10. Fig. 3 zeigt des Weiteren schematisch die Dichtfläche 332, die an der rechten Seitenwand 232 beim Einbringen des Dichtelements 33 in die Nut 23 zwischen dem Dichtelement 33 und der rechten Seitenwand 232 durch die Anpresskraft ap2 ausgebildet wird, sowie die Richtung der Anpresskraft ap2 dargestellt. Die Richtung der Anpresskraft ap2 ist senkrecht zu bzw. im Wesentlichen senkrecht zu der Montagerichtung mr des Deckels 10 und entgegengesetzt bzw. im Wesentlichen entgegengesetzt zu der Anpresskraft ap1.

Die Richtung der Anpresskraft ap1 entspricht auch einem Normalenvektor durch den die Ebene der Dichtfläche 331 definiert wird. Die Richtung der Anpresskraft ap2 entspricht auch einem Normalenvektor durch den die Ebene der Dichtfläche 332 definiert wird.

Fig. 4 zeigt schematisch, dass die Höhe hd des Dichtelements 33 kleiner als der Abstand hd des Stegs 13 des Deckels 10 vom dem Nutgrund 231 sein kann. Es kann somit eine "freie" Nuthöhe vorhanden sein, weil eine Abdichtung zwischen Nutgrund 231 und Dichtelement 33 nicht erforderlich ist.

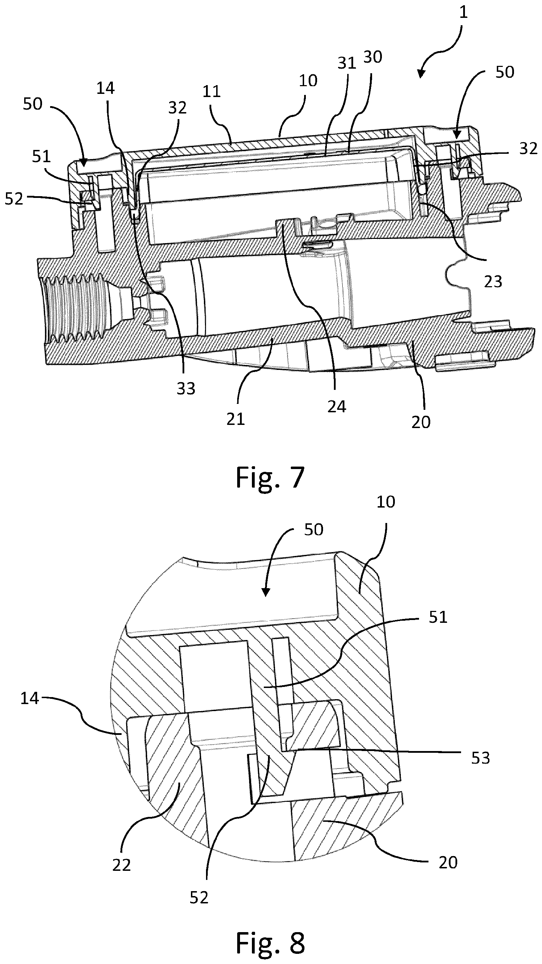

Die Figuren 7 bis 9 zeigen eine weitere Ausführung der Erfindung, die im Wesentlichen der Ausführung der Figuren 1 bis 6 entspricht.

Im Folgenden werden daher wie bei den anderen Ausführungen nur die Unterschiede beschrieben und im Übrigen auf die Beschreibung der anderen Ausführungen verwiesen.

In der gesamten Beschreibung der verschiedenen Ausführungen werden gleiche oder ähnliche bzw. sich entsprechende Teile mit den gleichen Bezugszeichen beschrieben. Auf die jeweils anderen Beschreibungen wird verwiesen.

Bei der Ausführung der Figuren 7 bis 9 ist der Deckel mit zwei Rastverbindungen an dem Gehäuse 20 befestigt.

Die Rastverbindungen 50 umfassen jeweils ein Rastelement 51, das einen Kopf 52 umfasst. Beim Einsetzen gleitet der Kopf an einer an dem Gehäuse ausgebildeten Gleitfläche, bis er an einen am Gehäuse 20 ausgebildeten Hinterschnitt 53 erreicht und dort federnd einrastet. Falls gewünscht können in dem Gehäuse 20 entsprechende Öffnungen vorgesehen sein, um das Rastelement 51 aus der eingerasteten Stellung zu befreien, damit der Deckel 10 wieder vom Gehäuse getrennt werden kann.

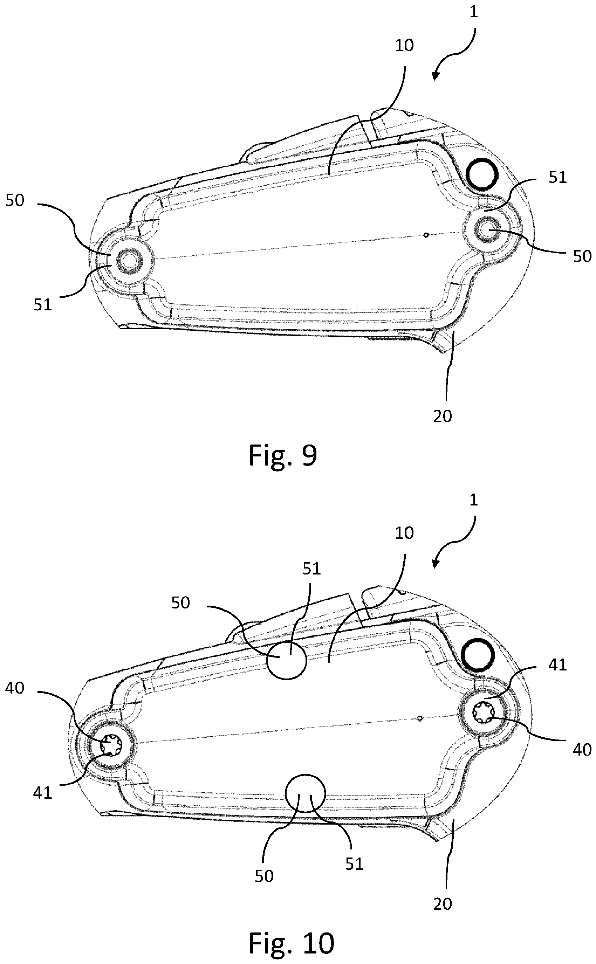

Fig. 10 zeigt eine Ausführung, bei der der Deckel mit zwei Schraubverbindungen 40 entsprechend der Ausführung der Figuren 1 bis 6 und zwei Rastverbindungen 50 entsprechend der Ausführung der Figuren 7 bis 9 an dem Gehäuse 20 befestigt ist. Die Rastverbindungen 50 sind aber nicht an den gegenüberliegenden Enden, sondern an den beiden Seiten des Deckels vorgesehen. Gemäß alternativen Ausführungsformen können die Schraubverbindungen 40 auch weggelassen und/oder durch andere Verbindungen ersetzt werden. Auch können weitere Verbindungen vorgesehen werden.

Die Figuren 11 bis 12 zeigen die optionale Anordnung von Stegen 234 in der Nut.

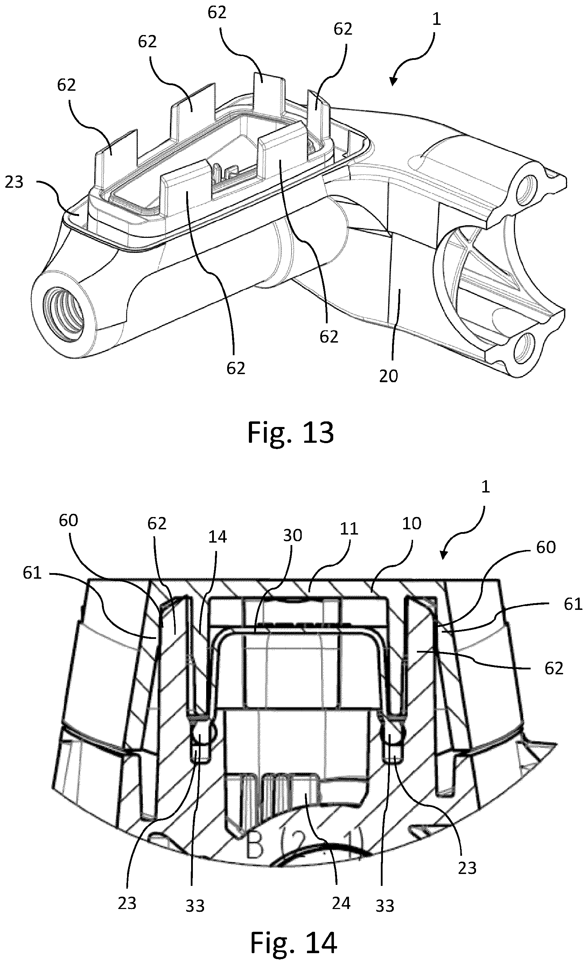

Bei der in den Figuren 13 bis 14 gezeigten Ausführung ist der Deckel mit 6 Schweißverbindungen an dem Gehäuse 20 befestigt. Die Scheißverbindungen 60 umfassen an dem Deckel 10 ausgebildete Stege 61, die mit der Seitenwand 12 übereinstimmen können und am dem Gehäuse 20 vorstehende Stege 62, die miteinander verschweißt werden, um eine vorzugsweise dauerhafte Verbindung zwischen Deckel 10 und Gehäuse 20 zu schaffen.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Geberarmatur (1) für eine hydraulische Bremse oder Kupplung lenkergeführter Fahrzeuge, die ein Gehäuse (20) aufweist, in dem ein Ausgleichsraum für Hydraulikfluid angeordnet ist, wobei in dem Gehäuse (20) eine Nut (23) vorgesehen ist, die den Ausgleichsraum einschließt, wobei der Ausgleichsraum mit einem Balg (30) fluiddicht abgeschlossen ist, wobei der Balg (30) ein Dichtungselement (33) aufweist, das in der Nut (23) angeordnet ist,
**dadurch gekennzeichnet, dass** die Breite (bd) des Dichtungselements (33) des Balgs (30) größer als die Nutbreite (bn) der Nut (23) ist.

2. Geberarmatur (1) nach Anspruch 1, wobei das Dichtungselement (33) derart in der Nut (23) angeordnet und derart ausgebildet ist, dass das Dichtungselement (33) gegen beide Seitenwände (231, 232) der Nut (23) jeweils eine fluiddichte Abdichtung ausbildet.

3. Geberarmatur (1) nach einem der vorhergehenden Ansprüche, wobei die Breite (bd) des Dichtungselements (33) des Balgs (30) mehr als 2%, vorzugsweise mehr als 4%, weiter vorzugsweise mehr als 6%, noch weiter vorzugsweise 8% größer als die Nutbreite (bn) der Nut (23) ist.

4. Geberarmatur (1) nach einem der vorhergehenden Ansprüche, wobei die Breite (bd) des Dichtungselements (33) des Balgs (30) weniger als 20%, vorzugsweise weniger als 18%, weiter vorzugsweise weniger als 16%, noch weiter vorzugsweise weniger als 14% noch weiter vorzugsweise weniger als 12% größer als die Nutbreite (bn) der Nut (23) ist.

5. Geberarmatur (1) nach einem der vorhergehenden Ansprüche, wobei die Breite (bd) des Dichtungselements (33) des Balgs (30) ungefähr 10% größer als die Nutbreite (bn) der Nut (23) ist.

6. Geberarmatur (1) nach einem der vorhergehenden Ansprüche, wobei die Geberarmatur (1) einen Deckel (10) aufweist, der den Balg (30) abdeckt, wobei der Deckel (10) zumindest einen Steg (13) oder mehrere Stege (13) aufweist, der bzw. die das Dichtungselement (33) des Balgs (30) in die Nut (23) drückt bzw. drücken.

7. Geberarmatur (1) nach Anspruch 6, wobei der Abstand (hn) zwischen dem Steg (13) bzw. den Stegen (13) und dem Nutgrund (231) der Nut (23) größer oder gleich der Höhe (hd) des Dichtelements (33) des Balgs (30) ist.

8. Geberarmatur (1) nach Anspruch 6 oder 7, wobei der Abstand (hn) zwischen dem Steg (13) bzw. den Stegen (13) und dem Nutgrund (231) der Nut (23) mehr als 5%, vorzugsweise mehr als 10%, weiter vorzugsweise mehr als 20%, noch weiter vorzugsweise 50% größer als die Höhe (hd) des Dichtelements (33) des Balgs (30) ist.

9. Geberarmatur (1) nach einem der Ansprüche 6 bis 8, wobei der Deckel (10) mit zumindest einer Schraubverbindung (40) oder mehreren Schraubverbindungen (40) an dem Gehäuse (20) befestigt ist.

10. Geberarmatur (1) nach einem der Ansprüche 6 bis 9, wobei der Deckel (10) mit zumindest einer Rastverbindung (50) oder mehreren Rastverbindungen (50) an dem Gehäuse (20) befestigt ist.

11. Geberarmatur (1) nach einem der Ansprüche 6 bis 10, wobei der Deckel (10) mit zumindest einer Schweißverbindung (60) oder mehreren Schweißverbindungen (60) an dem Gehäuse (20) befestigt ist.

12. Hydraulische Bremse bzw. hydraulische Kupplung bzw. hydraulische Fahrradbremse mit einer Geberarmatur nach einem der vorhergehenden Ansprüche.

## Claims

1. Master cylinder (1) for a hydraulic brake or clutch of handlebar-guided vehicles, which has a housing (20) in which a compensation space for hydraulic fluid is arranged, a groove (23), which encloses the compensation space, being provided in the housing (20), the compensation space being sealed in fluid-tight manner by means of a bellows (30), and the bellows (30) having a sealing element (33) which is arranged in the groove (23),
**characterized in that** the width (bd) of the sealing element (33) of the bellows (30) is greater than the groove width (bn) of the groove (23).

2. Master cylinder (1) according to claim 1, wherein the sealing element (33) is arranged in the groove (23) and designed in such a way that the sealing element (33) forms a fluid-tight seal against each of both side walls (231, 232) of the groove (23).

3. Master cylinder (1) according to any one of the preceding claims, wherein the width (bd) of the sealing element (33) of the bellows (30) is more than 2%, preferably more than 4%, more preferably more than 6%, even more preferably 8% greater than the groove width (bn) of the groove (23).

4. Master cylinder (1) according to any one of the preceding claims, wherein the width (bd) of the sealing element (33) of the bellows (30) is less than 20%, preferably less than 18%, more preferably less than 16%, even more preferably less than 14%, even more preferably less than 12% greater than the groove width (bn) of the groove (23).

5. Master cylinder (1) according to any one of the preceding claims, wherein the width (bd) of the sealing element (33) of the bellows (30) is about 10% greater than the groove width (bn) of the groove (23).

6. Master cylinder (1) according to any one of the preceding claims, wherein the master cylinder (1) has a cover (10) covering the bellows (30), wherein the cover (10) includes at least one web (13) or a plurality of webs (13) pressing the sealing element (33) of the bellows (30) into the groove (23).

7. Master cylinder (1) according to claim 6, wherein the distance (hn) between the web (13) or webs (13) and the groove base (231) of the groove (23) is greater than or equal to the height (hd) of the sealing element (33) of the bellows (30).

8. Master cylinder (1) according to claim 6 or 7, wherein the distance (hn) between the web (13) or webs (13) and the groove base (231) of the groove (23) is more than 5%, preferably more than 10%, more preferably more than 20%, even more preferably 50% greater than the height (hd) of the sealing element (33) of the bellows (30).

9. Master cylinder (1) according to any one of claims 6 to 8, wherein the cover (10) is fastened to the housing (20) by at least one screw connection (40) or a plurality of screw connections (40).

10. Master cylinder (1) according to any one of claims 6 to 9, wherein the cover (10) is fastened to the housing (20) with at least one latching connection (50) or a plurality of latching connections (50).

11. Master cylinder (1) according to any one of claims 6 to 10, wherein the cover (10) is fixed to the housing (20) with at least one welded joint (60) or a plurality of welded joints (60).

12. Hydraulic brake or hydraulic clutch or hydraulic bicycle brake with a master cylinder according to any one of the preceding claims.

## Revendications

1. Dispositif émetteur (1) pour un frein ou un embrayage hydraulique de véhicules guidés par guidon, comprenant un boîtier (20) dans lequel est disposée une chambre de compensation de fluide hydraulique, une rainure (23) étant prévue dans le boîtier (20), laquelle entoure la chambre de compensation, la chambre de compensation étant fermée de manière étanche aux fluides par un soufflet (30), le soufflet (30) présentant un élément d'étanchéité (33) qui est disposé dans la rainure (23),
**caractérisé en ce que** la largeur (bd) de l'élément d'étanchéité (33) du soufflet (30) est supérieure à la largeur (bn) de la rainure (23).

2. Dispositif émetteur (1) selon la revendication 1,
dans lequel l'élément d'étanchéité (33) est disposé dans la rainure (23) et est réalisé de telle sorte que l'élément d'étanchéité (33) forme un joint respectif étanche aux fluides contre les deux parois latérales (231, 232) de la rainure (23).

3. Dispositif émetteur (1) selon l'une des revendications précédentes,
dans lequel la largeur (bd) de l'élément d'étanchéité (33) du soufflet (30) est supérieure de plus de 2 %, de préférence de plus de 4 %, de préférence encore de plus de 6 %, de préférence encore de 8 % à la largeur (bn) de la rainure (23).

4. Dispositif émetteur (1) selon l'une des revendications précédentes,
dans lequel la largeur (bd) de l'élément d'étanchéité (33) du soufflet (30) est supérieure de moins de 20 %, de préférence de moins de 18 %, de préférence encore de moins de 16 %, de préférence encore de moins de 14 %, de préférence encore de moins de 12 % à la largeur (bn) de la rainure (23).

5. Dispositif émetteur (1) selon l'une des revendications précédentes,
dans lequel la largeur (bd) de l'élément d'étanchéité (33) du soufflet (30) est supérieure d'environ 10 % à la largeur (bn) de la rainure (23).

6. Dispositif émetteur (1) selon l'une des revendications précédentes,
dans lequel le dispositif émetteur (1) présente un couvercle (10) qui recouvre le soufflet (30), le couvercle (10) présentant au moins une nervure (13) ou plusieurs nervures (13) qui presse(nt) l'élément d'étanchéité (33) du soufflet (30) dans la rainure (23).

7. Dispositif émetteur (1) selon la revendication 6,
dans lequel la distance (hn) entre la nervure (13) ou les nervures (13) et le fond (231) de la rainure (23) est supérieure ou égale à la hauteur (hd) de l'élément d'étanchéité (33) du soufflet (30).

8. Dispositif émetteur (1) selon la revendication 6 ou 7,
dans lequel la distance (hn) entre la nervure (13) ou les nervures (13) et le fond (231) de la rainure (23) est supérieure de plus de 5 %, de préférence de plus de 10 %, de préférence encore de plus de 20 %, de préférence encore de 50 % à la hauteur (hd) de l'élément d'étanchéité (33) du soufflet (30).

9. Dispositif émetteur (1) selon l'une des revendications 6 à 8,
dans lequel le couvercle (10) est fixé au boîtier (20) par au moins un assemblage vissé (40) ou plusieurs assemblages vissés (40).

10. Dispositif émetteur (1) selon l'une des revendications 6 à 9,
dans lequel le couvercle (10) est fixé au boîtier (20) par au moins un assemblage par encliquetage (50) ou plusieurs assemblages par encliquetage (50).

11. Dispositif émetteur (1) selon l'une des revendications 6 à 10,
dans lequel le couvercle (10) est fixé au boîtier (20) par au moins un assemblage soudé (60) ou plusieurs assemblages soudés (60).

12. Frein hydraulique ou embrayage hydraulique ou frein hydraulique de bicyclette comportant un dispositif émetteur selon l'une des revendications précédentes.
